# EUROPÄISCHE PATENTSCHRIFT

(11) **EP 1 902 827 B1**
(45) Veröffentlichungstag und Bekanntmachung des Hinweises auf die Patenterteilung: **21.07.2010**
(21) Anmeldenummer: 07017705.0
(22) Anmeldetag: 11.09.2007
(51) Int. Cl.: B29C 45/76, B29C 49/78, G05B 19/409

(54) **Steuerung für eine Blasformmaschine mit mehreren Funktionseinheiten**
Controller for a blow moulding machine with several functional units
Commande pour une machine de formage par soufflage dotée de plusieurs unités fonctionnelles

(30) Priorität: 19.09.2006 DE 102006044589
(43) Veröffentlichungstag der Anmeldung: 26.03.2008
(73) Patentinhaber: Kautex Maschinenbau GmbH, 53229 Bonn (DE)
(72) Erfinder: Busse, Stefan, 53840 Troisdorf (DE); Lüllwitz, Uwe, 50829 Köln (DE); Seipel, Eberhard, 53225 Bonn (DE)
(74) Vertreter: Polypatent

(56) Entgegenhaltungen:
- WO-A-2005/009719
- WO-A-2007/045073
- DE-U1- 9 110 348
- JP-A- 2 103 114
- US-A1- 2004 093 115
- US-A1- 2006 247 822
- "GENERATIONENSPRUNG DIE MASCHINENSTEUERUNG CC 200" PLASTVERARBEITER, HUETHIG GMBH, HEIDELBERG, DE, Bd. 54, Nr. 10, Oktober 2003 (2003-10), Seiten 162-163, XP001154707 ISSN: 0032-1338
- HUBER A: "WELCHE MOEGLICHKEITEN BIETET DIE TRANSPUTERTECHNIK?" PLASTVERARBEITER, HUETHIG GMBH, HEIDELBERG, DE, Bd. 42, Nr. 11, 1. November 1991 (1991-11-01), Seiten 154-156,158,16, XP000282011 ISSN: 0032-1338

## Beschreibung

Die Erfindung betrifft eine Steuerung für eine Blasformmaschine. Maschinen wie beispielsweise Blasformmaschinen, die mehrere zusammenwirkende Funktionseinheiten aufweisen, werden häufig über speicherprogrammierbare Steuerungen parametriert bzw. programmiert. Die Parametrierung und Programmierung erfolgt über Ein- und Ausgabegeräte wie beispielsweise Bedienpulte mit Anzeigeeinrichtung oder durch über Berührungseingabe steuerbare Bildschirme (Sensorbildschirme), über die verschiedene Maschinenfunktionen anwählbar bzw. einstellbar sind. Verschiedene Zustände von Funktionseinheiten der Maschine werden numerisch oder alphanumerisch angezeigt. Darüber hinaus bieten bekannte Steuerungen die Möglichkeit der Parametrierung verschiedener Funktionseinheiten sowie das Anfahren bzw. Abfahren bestimmter Funktionszyklen einer Maschine.

Die Eingabe- und Darstellungsfunktionen der Steuerung sind üblicherweise bestimmten hydraulischen, pneumatischen oder elektrischen Funktionen zugeord net.

Die Eingabe und Parametrierung bestimmter Funktionen der Steuerung ist üblicherweise hierarchisch strukturiert. Die Menüstruktur ist üblicherweise entsprechend der hydraulischen, pneumatischen oder elektrischen Schaltung oder mechanischen Wirkungsweise der einzelnen Funktionseinrichtungen bzw. Funktionsgruppen aufgebaut.

Dies hat zur Folge, dass sowohl die Parametrierung als auch die Abfrage bestimmter Zustände oder auch das Abfahren bestimmter Bewegungszyklen der zu steuernden Maschine verhältnismäßig aufwendig ist. Häufig muss der Benutzer zur Einstellung bestimmter Parameter für Ventile, Servomotoren oder andere Teile einer baumförmig verzweigten Menüstruktur folgen, was von der Bedienung kaum intuitiv oder wenig benutzerfreundlich ist.

Auch ist die Visualisierung bestimmter Bewegungszyklen und bestimmter Bewegungsabläufe bei komplexen Maschinensteuerungen bei den bekannten speicherprogrammierbaren Steuerungen nur In Form von komplexen numerischen und alphanumerischen Darstellungen möglich, wodurch sich sowohl die Steuerung als auch die Parametrierung der Maschine recht zeitaufwendig gestalten. Beispielsweise bei einer Blasformmaschine mit Extrusionseinrichtung, zueinander und ggf. bezüglich der Extrusionseinrichtung bewegbaren Blasformteilen und Mitteln zur Entnahme von Artikeln aus der Blasform, beispielsweise Greifern oder dergleichen, erfolgt mit den bisher bekannten Steuerungen eine Darstellung der Bewegungszustände beispielsweise der Blasformhälften, der Beschleunigungs- und Verzögerungsphasen der Formhälften bei der Schließ- oder Öffnungsbewegung nur alphanumerisch, was unübersichtlich ist.

Aus der WO 2005/009719 ist ein Verfahren zur interaktiven Steuerung einer Kunststoff-Spritzgießmaschine bekannt, bei dem die für den Arbeitsablauf der Maschine erforderlichen Betriebsparameter über eine mit Betätigungsfeldern versehene Eingabeeinheit eingegeben werden und anschließend ein oder mehrere Arbeitsabläufe gemäß den gespeicherten Betriebsparametern durchgeführt werden, wobei ein Datensatz über die Grundregeln des Arbeitsablaufs der Maschine eingespielt wird und unter Einsatz des Datensatzes als Ergebnis den Bedienern eine selektierte Auswahl an aufgrund der Maschinenausrüstung und -umgebung möglichen Eingabemöglichkeiten von weiteren, die bestehenden Teile des Arbeitslaufs kompatibel einfügbaren Teile des Arbeitsablaufs auf einer Oberfläche visualisiert zur Verfügung gestellt wird. Ziel des Verfahrens gemäß der WO 2005/009719 ist es, die interaktive Steuerung einer Spritzgießmaschine dahingehend zu verbessern, dass die Erstellung eines Ablaufs erleichtert wird. Dies wird hauptsächlich dadurch errreicht, dass die Bedienoberfläche soweit bereinigt wird, dass dem Bediener nur eine selektierte Auswahl an von der Steuerung angebotenen Betätigungsfeldern zur Verfügung gestellt wird. Es werden dem Bediener auf der Oberfläche dynamische Eingabefelder angeboten, die sich je nach Eingabe durch den Benutzer so verändern, dass mit fortschreitender Einstellung des Arbeitslaufes die Eingabemöglichkeiten für den Bediener immer übersichtlicher werden. Im Übrigen ist die aus der WO 2005/009719 A1 beschriebene Benutzeroberfläche in bekannter Art und Weise hierarchisch, d. h. mit einer baumförmig verzweigten Menüstruktur aufgebaut, sodass der Benutzer zur Einstellung bestimmter Parameter dieser verzweigten Menüstruktur folgen muss. Eine Vereinfachung wird nur insoweit erreicht, als dass bestimmte Eingabefelder je nach gewählter Verzweigung nicht dargestellt sind.

Ähnliche Bedienungseinrichtungen und Bedienungskonzepte sind beispielsweise aus den Druckschriften US 2004/0093115 A1, WO 2007/045073 A1,

US 2006/0247822 A1, DE 91 10 348 U1 und JP 02103114 A. Schließlich ist eine solche Maschinensteuerung in dem Fachaufsatz Huber A.: "Welche Möglichkeiten bietet die Transputertechnik?", Plastverarbeiter, Hüttich GmbH, Heidelberg, DE, Band 42, Nr. 11, 1. November 1991, Seiten 154-156, 158, 160, XP-00282011 ISSN: 0032-1338 beschrieben. Eine weitere Maschinen steuerung ist aus dem Artikel "Generationensprung" Plastverarbeiter, 54. Jahrgung (2003) Nr. 10, Seiten 162 und 163, XP-001154707 bekannt.

Der Erfindung liegt daher die Aufgabe zugrunde, eine Steuerung für eine Blasformmaschine Maschine mit mehreren komplexen Funktionseinheiten, bereitzustellen, bei der eine besonders einfache Einstellung und/oder Darstellung der Bewegungsabläufe und/oder Zustandsgrößen der Funktionseinheiten der Maschine möglich ist. Insbesondere soll auch die Visualisierung der Bewegungsabläufe und Zustandsgrößen so sein, dass diese Größen schnell, einfach und intuitiv erfassbar sind.

Die Aufgabe wird gelöst durch eine Steuerung für eine Blasformmaschine mit mehreren Funktionseinheiten, wobei die Blasformmaschine wenigstens eine Extrusionseinrichtung, zueinander und ggf. bezüglich der Extrusionseinrichtung bewegbare Blasformteile, Mittel zur Ausformung wenigstens eines Artikels in der Blasform sowie Mittel zur Entnahme des Artikels aus der Blasform umfasst und wobei die Steuerung wenigstens eine Ein- und Ausgabeeinrichtung zur Einstellung und/oder Darstellung der Bewegungsabläufe und/oder Zustandsgrößen der Funktionseinheiten der Maschine und Bedienelemente zur Auswahl bestimmter Eingabe- und Darstellungsfunktionen umfasst, wobei die Eingabe- und Darstellungsfunktionen zumindest teilweise gruppenweise in verschiedenen Ebenen angeordnet sind, in einer ersten oberen Eingabe- und Darstellungsebene alle Funktionseinheiten des Prozesses über zugehörige Bedienelemente abgebildet sind und wobei alle zu einer Funktionseinheit zugehörigen Eingabe- und/oder Darstellungsfunktionen auf jeweils wenigstens einer weiteren Ebene abgebildet sind, die jeweils unmittelbar durch Betätigung des entsprechenden Bedienelements der ersten Ebene ansteuerbar ist.

Vorteilhafte Weiterbildungen der Erfindung sind Gegenstan der abhängigen Ansprüche.

Die Vorzüge des erfindungsgemäßen Verfahrens lassen sich dahingehend zusammenfassen, dass über die erste und oberste Eingabe- und Darstellungsebene alle Funktionseinheiten der Maschine unmittelbar ansteuerbar sind, und zwar ohne Rücksicht auf deren elektrische, pneumatische oder hydraulische Verschaltung. Bei der Steuerung einer Blasformmaschine sind beispielsweise auf der oberen Eingabe- und Darstellungsebene alle Funktionseinheiten und Funktionen des Blasformprozesses beginnend mit der Materialaufbereitung und Plastifizierung im Extruder, über die Formung, Speicherung und Manipulation des Extrudats, die Formgebung in der Blasform und Zusatzfunktionen bis hin zu den Einrichtungen zur Entnahme des fertig geblasenen Artikels gruppenweise angeordnet und über entsprechende Symbole dargestellt.

Die Symbole stellen gleichzeitig Bedlenelemente der vorzugsweise als Sensorbildschirm (durch Berührungseingabe steuerbarer Bildschirm) ausgebildeten Ein- und Ausgabeeinrichtung dar.

Zweckmäßigerweise ist jede Funktionseinheit der Maschine, beispielsweise die Werkzeuge, mit Gruppen von Einzelfunktionen abgebildet, die auf der ersten Eingabe- und Darstellungsebene zusammengefasst sind, wobei sich vorzugsweise bestimmte Funktionen bestimmten Funktionseinheiten frei zuordnen lassen.

Jede Funktion des Prozesses kann als graphisches Symbol abgebildet sein, wobei wenigstens einige der Funktionssymbole als berührungssensitives Bedienelement ausgebildet sind.

Zumindest einige der Funktionseinheiten können über entsprechende Bedienelemente der weiteren Ebene parametrierbar sein.

Vorzugsweise sind die Zustandsgrößen zumindest einiger Funktionseinheiten in Form von graphischen Darstellungen visualisierbar.

Die Darstellung zumindest einiger Zustandsgrößen kann beispielsweise zweidimensional als Funktion einer Zykluszeit wiedergebbar sein, sodass der Benutzer den Zustand und den Bewegungsablauf bestimmter Maschinenteile ohne numerische oder alphanumerische Informationen sofort erfassen kann.

Die Erfindung wird nachstehend anhand eines durch die Zeichnungen veranschaulichten Ausführungsbeispiels erläutert.

Es zeigen:
- Figur 1:: einen ersten Teil der ersten oberen Eingabe- und Darstellungsebene der Ein- und Ausgabeeinrichtung als Teil der Steuerung einer Blasformmaschine,
- Figur 2:: einen zweiten Teil der oberen Eingabe- und Darstellungsebene der Ein- und Ausgabeeinrichtung,
- Figur 3:: eine zweite Eingabe- und Darstellungsebene unterhalb der oberen Eingabe- und Darstellungsebene der Ein- und Ausgabeeinrichtung, die den Zustand und Bewegungsablauf der Blasformhälften verdeutlicht und
- Figur 4:: eine andere Seite der zweiten Eingabe- und Darstellungsebene unterhalb der oberen Eingabe- und Darstellungsebene der Ein- und Ausgabeeinrichtung der Steuerung der Blasformmaschine, auf der die Funktionen des Blasvorgangs abgebildet sind.

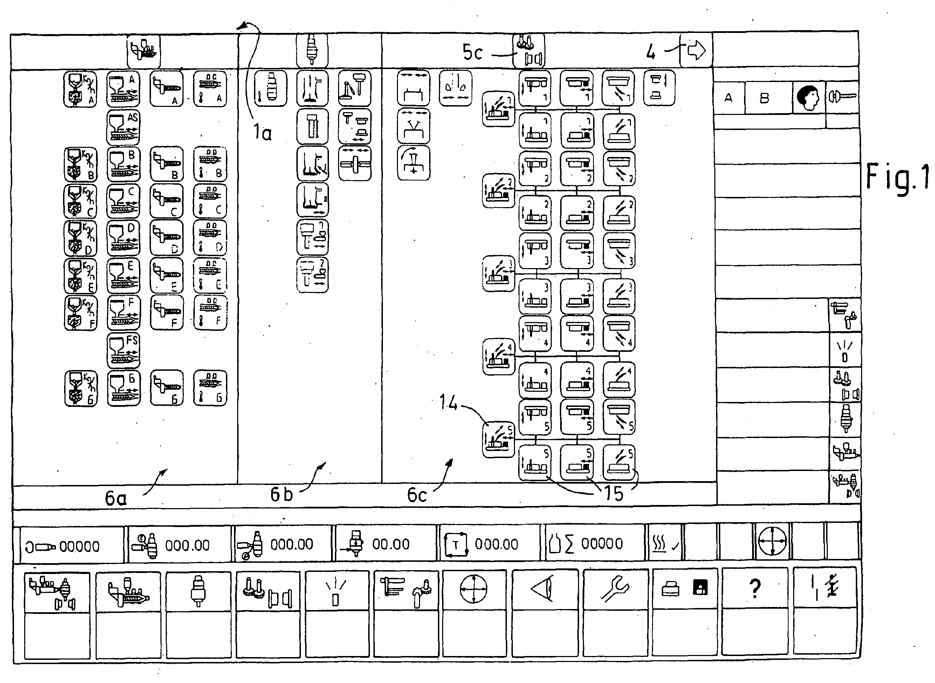

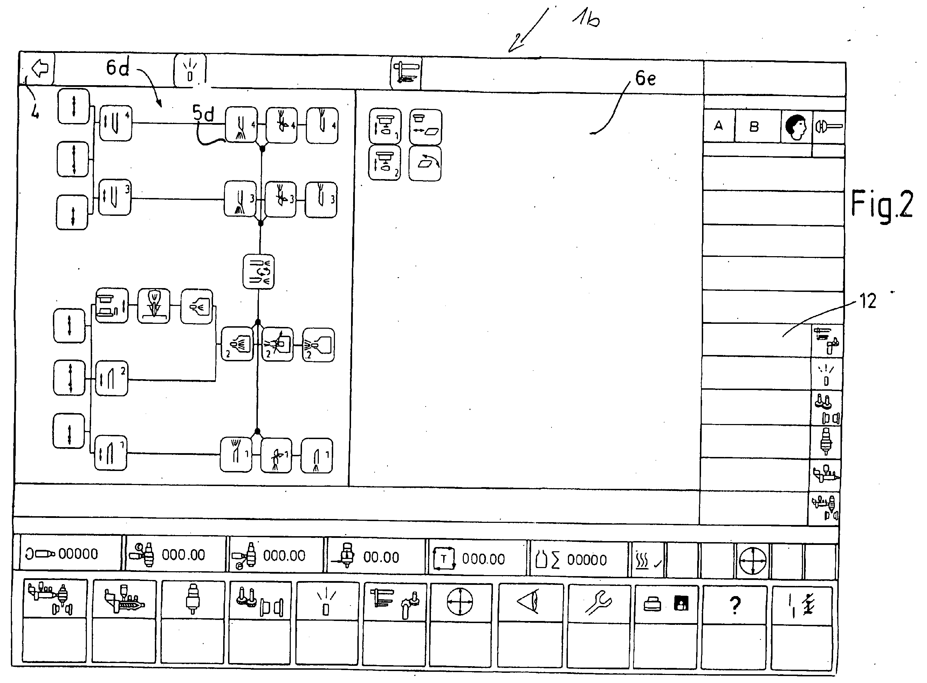

Bei den beschriebenen Ausführungsbeispiel zeigen die Figuren verschiedene Seiten zweier Eingabe- und Darstellungsebenen 1 a, 1 b; 2a und 2b einer Ein- und Ausgabeeinrichtung einer Steuerung für eine Blasformmaschine. Die Ein- und Ausgabeeinrichtung ist als Sensorbildschirm (durch Berührungseingabe steuerbarer Bildschirm) ausgebildet und stellt einen Teil einer speicherprogrammierbaren Steuerung dar. Die Figuren 1 und 2 geben die obere Eingabe- und Darstellungsebene 1 a, 1 b wieder, die aus rein praktischen Erwägungen (Darstellungsgröße) beim vorliegenden Ausführungsbeispiel auf zwei nebeneinander angeordneten Seiten des Menüs dargestellt ist. Zwischen dem ersten Teil der oberen Eingabe- und Darstellungsebene 1 a und dem zweiten Teil der oberen Eingabe- und Darstellungsebene 1 b lässt sich mittels der Pfeiltasten 4 hin und her blättern. Die auf den jeweiligen Eingabe- und Darstellungsebenen 1 a, 1b; 2a, 2b jeweils gruppenweise angeordneten kästchenförmigen Symbole 5 stellen jeweils Bedienelemente bzw. Tasten der Ein- und Ausgabeeinrichtung dar. Die obere Eingabe- und Darstellungsebene umfasst insgesamt fünf größere Bedienfelder 6a-e, auf denen jeweils in Form von Symbolen 5 gruppenweise einzelne Funktionseinheiten und Funktionen des Blasformverfahrens dargestellt sind, wobei die einem Verfahrensschritt zugehörigen Funktionseinheiten und Funktionen jeweils in einem Bedienfeld 6a-d gruppiert sind. Beispielsweise sind in dem Bedienfeld 6a alle Funktionen zur Materialaufbereitung und Plastifizierung zusammengefasst, wobei jedes der Symbole 5 gleichzeitig ein Bedienelement darstellt, dessen Berührung bzw. Anwahl eine zugehörige Eingabe- und Darstellungsebene 2a, 2b oder jeweils eine Eingabeebene oder eine Darstellungsebene öffnet.

In dem Bedienfeld 6b sind beispielsweise alle Funktionen der Schlauchformung, Speicherung und Manipulation zusammengefasst, in dem Bedienfeld 6c finden sich beispielsweise die verschiedenen Funktionen betreffend die Formbewegungen sowie Funktionen von Zusatzeinrichtungen wie beispielsweise einer Spreizeinrichtung für das am Extrusionskopf austretende Extrudat wieder. Im Bedienfeld 6d sind alle Funktionen betreffend den Blasvorgang einschließlich Vorblasen und Spülen zusammengefasst. In dem Bedienfeld 6e sind beispielsweise die Funktionen bereffend die Artikelentnahme und Nachbereitung zusammengefasst.

In dem hier erörterten Ausführungsbeispiel sind nur Ausschnitte aus den Bedienmenüs der erfindungsgemäßen Steuerung beispielsweise dargestellt. Die jeweils dargestellten Eingabe- und Darstellungsebenen zeigen nur einzelne Zustände einer Beispielkonfiguration einer Blasformmaschine, es ist für den Fachmann klar, dass die einzelnen Symbole und Bedienfelder 5, 6 individuell belegbar sind und besonderen Maschinenfunktionen zuordenbar sind. Üblicherweise besitzt eine Steuerung verschiedene Eingabemodi, beispielsweise einen Einrichtungsmodus, einen Parametrierungsmodus oder auch nur einen Überwachungsmodus.

Dargestellt sind hier nur diejenigen Menüseiten der zwei Eingabe- und Darstellungsebenen, die für das Verständnis der Funktionsweise der Steuerung hilfreich sind. Es ist ebenfalls für den Fachmann ersichtlich, dass die Symbole 5 je nach zu steuernder Maschine unterschiedlich sein können. Mit dem Bezugszeichen 12 sind Beschriftungsfelder der in den Figuren dargestellten Eingabe- und Darstellungsebenen 1a, 1b; 2a, 2b bezeichnet, die für Textbeschriftungen zu bestimmten Symbolen freigehalten sind.

Auf der oberen Eingabe- und Darstellungsebene 1a, 1b sind die Bedienelemente (Symbole 5) jeweils von links nach rechts in der Reihenfolge der Funktionsweise der Blasformmaschine angeordnet.

Bekanntermaßen beginnt der Blasformprozess durch Plastifizieren von thermoplastischem Material in einem Extruder. Das Material wird über den Extruder zum Extrusionskopf (Bedienfeld 6b) gefördert. Der aus dem Extrusionskopf ausgestoßene oder austretende schlauchförmige Vorformling wird in dem beschriebenen Ausführungsbeispiel mit Spreizdornen zwischen den geöffneten Hälften eines Blasformwerkzeugs aufgespreizt. Es ist für den Fachmann selbstverständlich, dass die Extrusion des Vorformlings sowohl kontinuierlich als auch diskontinuierlich erfolgen kann. Anschließend werden die Formhälften des Werkzeugs geschlossen, der Vorformling wird innerhalb des Formnestes aufgeweitet, und zwar durch Einschießen einer Blasnadel und Gasdruckbeaufschlagung. Danach wird das Blaswerkzeug unter dem Extrusionskopf verfahren, der Artikel wird entnommen und nachbearbeitet.

Die auf der oberen Eingabe- und Darstellungsebene jeweils dargestellten Symbole 5 verkörpern jeweils einzelne Funktionseinheiten sowie zugehörige Funktionen der Blasformmaschine. Das mit dem Bezugszeichen 14 versehene Symbol im Bedienfeld 6c der oberen Eingabe- und Darstellungsebene 1a verkörpert die Funktionseinheit eines Ventils zur Steuerung von Schiebern im Werkzeug. Die mit 15 bezeichneten Symbole stellen hingegen verschiedene Funktionen des Ventils dar. Die in den Figuren 1 und 2 dargestellte obere Eingabe- und Darstellungsebene 1a, 1b befindet sich im Einrichtungsmodus, in welchem einer Funktionseinheit verschiedene Funktionen zuordenbar sind. In einem Parametrierungs- oder Überwachungsmodus sind dann nur diejenigen Funktionen dargestellt, die mit einer Funktionseinheit verknüpft sind.

Jeweils alle zu einer Funktionseinheit und Funktion des von der Maschine ausgeführten Prozesses gehörigen Eingabe- und Darstellungsfunktionen sind jeweils auf einer unter der oberen Eingabe- und Darstellungsebene 1a, 1b angeordneten Eingabe- und Darstellungsebene 2a, 2b zusammengefasst. Bei dem dargestellten Ausführungsbeispiel sind, wie erwähnt, insgesamt zwei übereinander angeordnete Eingabe- und Darstellungsebenen vorgesehen, nämlich die obere Eingabe- und Darstellungsebene 1a, 1 b und die untere Eingabe- und Darstellungsebene 2a, 2b wobei jede Eingabe- und Darstellungsebene 1a, 1b; 2a, 2b jeweils mehrere nebeneinander angeordnete Menüseiten umfasst. Diese nebeneinander angeordneten Menüseiten können jeweils nur Eingabefunktionen oder nur Darstellungsfunktionen aufweisen. Ebenso ist es vorgesehen, dass auf einer Menüseite alle zu einer bestimmten Funktionseinheit des Prozesses gehörigen Eingabe- und Darstellungsfunktionen zusammengefasst sind.

Alternativ hierzu ist es möglich, mehrere Eingabe- und Darstellungsfunktionen unterhalb der obersten Eingabe- und Darstellungsfunktion hierarchisch anzuordnen, wobei auch in diesem Falle der direkte Zugriff von der obersten Eingabe- und Darstellungsebene 1a, 1b auf die jeweilige Eingabe- und Darstellungsfunktion möglich ist.

Bei einer Maschinensteuerung können grundsätzlich verschiedene Elemente, beispielsweise Hydraulikventile, Pneumatikventile und Schalter, verschiedene Funktionen ausüben. Wichtig für die Steuerung gemäß der Erfindung ist, dass jeweils die Eingabe- und Darstellungsfunktionen, die zu einer Maschinenfunktion oder zu einer Funktionseinheit gehören, auf einer Seite in einem Funktionszusammenhang dargestellt sind.

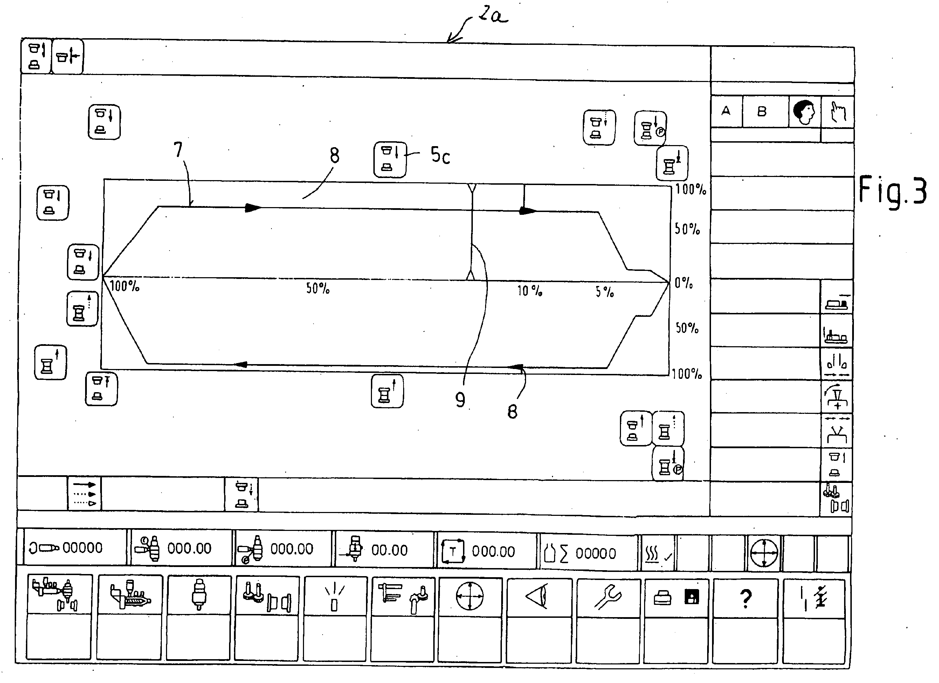

In Figur 1 verkörpert das Symbol 5c im Bedienfeld 6c beispielsweise die Funktion "Schließen der Blasformhälften", die zu der Funktionseinheit "Blaswerkzeug" gehört. Eine Betätigung dieses Bedienelements öffnet die in Figur 3 dargestellte zweite Eingabe- und Darstellungsebene 2a, die alle Eingabe- und Darstellungsfunktionen zu der Funktionseinheit "Blasformhälften" abbildet. Der in Figur 3 dargestellte Graph 7 veranschaulicht den Bewegungsablauf des Schließens und Öffnens der Blasformhälften, wobei der Weg der Blasformhälften über die Zeit aufgetragen ist. In der oberen Hälfte des Graphen 7 ist der Schließvorgang, in der unteren Hälfte des Graphen der Öffnungsvorgang abgebildet. Die Pfeile 8 kennzeichnen den Bewegungsablauf. Auf der Abszisse ist der Weg aufgetragen, auf der Ordinate die Geschwindigkeit der Blasformhälften, jeweils als relative Größen. Die letzten 10 % des Schließweges der Blasformhälften sind überzeichnet dargestellt. Über den mit 9 bezeichneten Fortschrittsbalken ist die augenblickliche Position der Blasformhälften zueinander visualisiert.

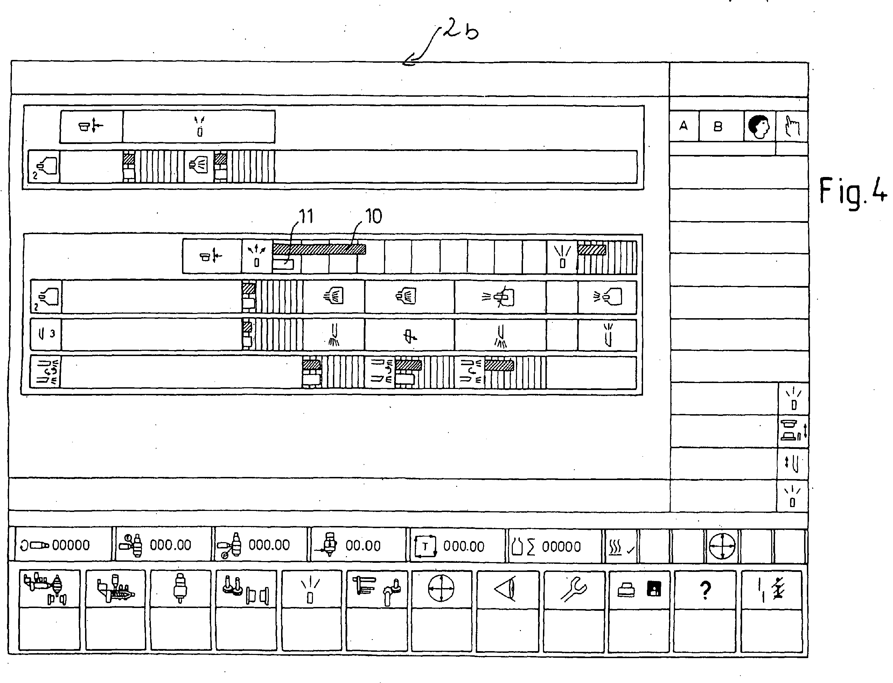

Beispielsweise das Anwählen beispielsweise des Symbols 5d im Bedienfeld 6d führt zum Aufbau der in Figur 4 gezeigten Seiten der zweiten Eingabe- und Darstellungsebene 2b, auf welcher alle Funktionen und Zustände des Blasvorgangs dargestellt sind. Auf der betreffenden Anzeige ist die Abfolge und zeitliche Dauer bestimmter Blasvorgänge auch als Soll-/Ist-Vergleich dargestellt. Die jeweils schraffierten Fortschrittsbalken 10 zeigen die Soll-Dauer des betreffenden Vorgangs an, die nicht schraffierten Fortschrittsbalken 11 zeigen die Ist-Dauer des jeweiligen Vorgangs an. Felder, die nur Fortschrittsbalken zeigen, symbolisieren Wartezeiten. Felder, die Fortschrittsbalken und entsprechende Symbole zeigen, veranschaulichen die zeitliche Dauer eines bestimmten Vorgangs bzw. einer bestimmten Funktion als Soll-/lst-Vergleich. Die Reihenfolge der Vorgänge ist von oben nach unten und von links nach rechts dargestellt.

Über die Anwahl bestimmter Funktionseinheiten auf der obersten Eingabe- und Darstellungsebene 1 a, 1 b lässt sich jeweils eine Eingabe- und Darstellungsebene öffnen, auf der die entsprechenden Darstellungsfunktionen einer Funktionseinheit zusammengefasst sind. Die Anwahl einer bestimmten Einzelfunktion in einem der Bedienfelder 6a-e öffnet eine Eingabe- und/oder Darstellungsebene, auf der die jeweilige Funktion parametrierbar ist.

### Bezugszeichenliste

- 1a, 1b: erste und zweite Menüseite oberen Eingabe- und Darstellungsebene
- 2a: eine Menüseite der zweiten Eingabe- und Darstellungsebene
- 2b: eine Menüseite der zweiten Eingabe- und Darstellungsebene
- 4: Pfeiltasten
- 5, 5c, 5d: Symbole
- 6a-e: Bedienfelder
- 7: Graph
- 8: Pfeile
- 9, 10, 11: Fortschrittsbalken
- 12: Beschriftungsfelder
- 14: Funktionseinheiten
- 15: Funktionen

## Patentansprüche

1. Steuerung für eine Blasformmaschine mit mehreren Funktionseinheiten, wobei die Blasformmaschine wenigstens eine Extrusionseinrichtung, zueinander und ggf. bezüglich der Extrusionseinrichtung bewegbare Blasformteile, Mittel zur Ausformung wenigstens eines Artikels in der Blasform sowie Mittel zur Entnahme des Artikels aus der Blasform umfasst und wobei die Steuerung wenigstens eine Eingabe- und Ausgabeeinrichtung zur Einstellung und/oder Darstellung der Bewegungsabläufe und/oder Zustandsgrößen der Funktionseinheiten der Blasformmaschine und Bedienelemente zur Auswahl bestimmter Eingabe- und Darstellungsfunktionen umfasst, wobei die Eingabe- und Darstellungsfunktionen zumindest teilweise gruppenweise in verschiedenen Ebenen (1a, 1b; 2a, 2b) angeordnet sind, in einer ersten oberen Eingabe- und Darstellungsebene (1a, 1b) alle Funktionseinheiten des Prozesses über zugehörige Bedienelemente abgebildet sind, und wobei alle zu einer Funktionseinheit gehörigen Eingabe- und/oder Darstellungsfunktionen auf jeweils einer oder mehreren weiteren Ebenen abgebildet sind, die jeweils unmittelbar durch Betätigung des entsprechenden Bedienelements der ersten Ebene ansteuerbar sind.

2. Steuerung nach Anspruch 1, **dadurch gekennzeichnet, dass** die Eingabe- und Ausgabeeinrichtung als Sensorbildschirm ausgebildet ist.

3. Steuerung nach einem der Ansprüche 1 oder 2, **dadurch gekennzeichnet, dass** jede Funktionseinheit mit Gruppen von Funktionen abgebildet ist, die auf der ersten Eingabe- und Darstellungsebene (1a, 1b) zusammengefasst sind.

4. Steuerung nach Anspruch 3, **dadurch gekennzeichnet, dass** jede Funktion des Prozesses als graphisches Symbol (5, 5c, 5d) abgebildet ist und dass wenigstens einige der Funktionssymbole als berührungssensitives Bedienelement ausgebildet sind.

5. Steuerung nach einem der Ansprüche 1 bis 4, **dadurch gekennzeichnet, dass** zumindest einige der Funktionseinheiten über entsprechende Bedienelemente der weiteren Ebenen parametrierbar sind.

6. Steuerung nach einem der Ansprüche 1 bis 5, **dadurch gekennzeichnet, dass** die Zustandsgrößen zumindest einiger Funktionseinheiten in Form von graphischen Darstellungen visualisierbar sind.

7. Steuerung nach Anspruch 6, **dadurch gekennzeichnet, dass** die Darstellung zumindest einiger Zustandsgrößen zweidimensional als Funktion einer Zykluszeit wiedergebbar ist.

## Claims

1. Controller for a blow moulding machine with multiple functional units, the blow moulding machine including at least one extrusion device, blowing mould parts which are movable relative to each other and if required relative to the extrusion device, means of forming at least one article in the blowing mould, and means of removing the article from the blowing mould, and the controller including at least one input and output device for setting and/or presenting the movement courses and/or state magnitudes of the functional units of the blow moulding machine and operating controls for selecting specified input and presentation functions, the input and presentation functions being arranged at least partly in groups at different levels (1a, 1b; 2a, 2b), all functional units of the process being mapped at a first, upper input and presentation level (1a, 1b) via associated operating controls, and all input and presentation functions associated with a functional unit being mapped at one or more further levels, each of which can be controlled directly by actuating the corresponding operating control of the first level.

2. Controller according to Claim 1, **characterized in that** the input and output device is in the form of a touchscreen.

3. Controller according to one of Claims 1 or 2, **characterized in that** each functional unit is mapped by groups of functions which are combined at the first input and presentation level (1a, 1b).

4. Controller according to Claim 3, **characterized in that** each function of the process is mapped as a graphic symbol (5, 5c, 5d), and that at least some of the function symbols are in the form of a touch-sensitive operating element.

5. Controller according to any one of Claims 1 to 4, **characterized in that** at least some of the functional units can be parameterised by corresponding operating elements of the other levels.

6. Controller according to any one of Claims 1 to 5, **characterized in that** the state magnitudes of at least some functional units can be displayed in the form of graphic presentations.

7. Controller according to Claim 6, **characterized in that** the presentation of at least some state magnitudes can be represented two-dimensionally as a function of a cycle time.

## Revendications

1. Commande pour une machine de formage par soufflage dotée de plusieurs unités fonctionnelles, la machine de formage par soufflage comprenant au moins un dispositif d'extrusion, des parties de formage par soufflage mobiles les unes par rapport aux autres et éventuellement par rapport au dispositif d'extrusion, des moyens pour démouler au moins un article dans le moule de soufflage ainsi que des moyens pour retirer l'article du moule de soufflage et la commande comprenant au moins un dispositif d'entrée et de sortie pour le réglage et/ou la représentation des déroulements de déplacement et/ou grandeurs d'état des unités fonctionnelles de la machine de formage par soufflage et des éléments de commande pour la sélection des fonctions d'entrée et de représentation déterminées, les fonctions d'entrée et de représentation étant disposées au moins en partie par groupes dans différents plans (1a, 1b ; 2a, 2b), toutes les unités fonctionnelles du processus étant reproduites via des éléments de commande afférents dans un premier plan d'entrée et de représentation (1a, 1b) supérieur, et toutes les fonctions d'entrée et/ou de représentation afférentes à une unité fonctionnelle étant reproduites sur respectivement un ou plusieurs autres plans, lesquelles peuvent être commandées respectivement directement par l'actionnement de l'élément de commande correspondant du premier plan.

2. Commande selon la revendication 1, **caractérisée en ce que** le dispositif d'entrée et de sortie est réalisé comme un écran tactile.

3. Commande selon l'une quelconque des revendications 1 ou 2, **caractérisée en ce que** chaque unité fonctionnelle est reproduite avec des groupes de fonctions qui sont réunies sur le premier plan d'entrée et de représentation (1a, 1b).

4. Commande selon la revendication 3, **caractérisée en ce que** chaque fonction du processus est reproduite comme symbole graphique (5, 5c, 5d) et **en ce qu'**au moins quelques-uns des symboles fonctionnels sont réalisés comme élément de commande à contact sensitif.

5. Commande selon l'une quelconque des revendications 1 à 4, **caractérisée en ce qu'**au moins quelques-unes des unités fonctionnelles peuvent être paramétrées via des éléments de commande correspondants des autres plans.

6. Commande selon l'une quelconque des revendications 1 à 5, **caractérisée en ce que** les grandeurs d'état d'au moins quelques unités fonctionnelles peuvent être visualisées sous la forme de représentations graphiques.

7. Commande selon la revendication 6, **caractérisée**
**en ce que** la représentation d'au moins quelques grandeurs d'état est reproductible en deux dimensions en fonction d'un temps de cycle.
